(19) Europäisches Patentamt
European Patent Office
Office européen des brevets

(11) Veröffentlichungsnummer: **0 059 412**
**A2**

(12) # EUROPÄISCHE PATENTANMELDUNG

(21) Anmeldenummer: 82101354.7

(22) Anmeldetag: 23.02.82

(51) Int. Cl.³: **F 23 N 3/00**

(30) Priorität: 24.02.81 DE 3106744

(43) Veröffentlichungstag der Anmeldung: 08.09.82 Patentblatt 82/36

(84) Benannte Vertragsstaaten: AT BE CH FR GB IT LI NL SE

(71) Anmelder: Albertz, Johannes
Marktstrasse 11
D-4390 Gladbeck(DE)

(72) Erfinder: Albertz, Johannes
Marktstrasse 11
D-4390 Gladbeck(DE)

(54) **Verfahren zur Verbrennung gasförmiger Brennstoffe.**

(57) Bei der Verbrennung gasförmiger, inertgashaltiger Brennstoffe wird zum Ausgleich von sich während des Betriebes verändernden Inertgasanteilen im Brenngas die Reinsauerstoffzufuhr erhöht und die Luftzufuhr verringert, wenn die Inertgasmenge im Brenngas ansteigt, die Reinsauerstoffzufuhr verringert und die Luftzufuhr erhöht, wenn die Inertgasmenge im Brenngas absinkt. Insbesondere wird die Ballastgasmenge, das ist die Summe von Inertgasmenge im Brenngas und Stickstoffmenge in der Verbrennungsluft, konstant gehalten. Die Steuerung kann über das Verhältnis der Abgasmenge zur Menge der brennbaren Komponente im Brenngas erfolgen. Das Verfahren kann insbesondere beim Claus-Prozeß angewendet werden.

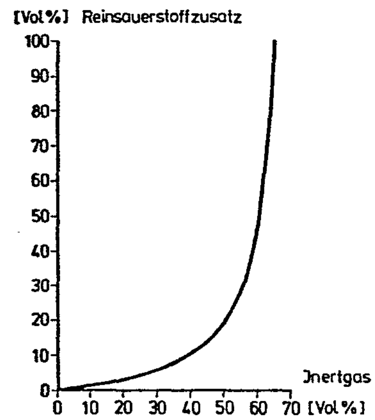


Figur 2

Reinsauerstoffzusatz zur Verbrennungsluft in Abhängigkeit vom Jnertgasgehalt des Brenngases für die Reaktion

$H_2S + \frac{1}{2}O_2 \rightarrow S + H_2O$

EP 0 059 412 A2

Croydon Printing Company Ltd.

## Verfahren zur Verbrennung gasförmiger Brennstoffe

Die Erfindung betrifft ein Verfahren zur Regelung der Ballastgasmenge bei Verbrennungsprozessen, bei denen gasförmige Brennstoffe mit wechselndem Gehalt an brennbaren Bestandteilen zum Einsatz gelangen. Beispielhaft sei als gasförmiger Brennstoff, im folgenden kurz als Brenngas bezeichnet, das Einsatzgas für Clausanlagen zur Herstellung von Schwefel aus Schwefelwasserstoff genannt. Das Einsatzgas für Clausanlagen kann neben dem brennbaren Hauptbestandteil Schwefelwasserstoff auch Kohlendioxid, Ammoniak und weitere, teils brennbare, teils unbrennbare Bestandteile enthalten. Es fällt z. B. bei der Desorption schwach alkalischer Lösungen an, mit denen Schwefelwasserstoff aus Erdgasen oder Raffineriegasen ausgewaschen wird. Die in einem Brenngas enthaltenden nicht-brennbaren Anteile sollen im folgenden mit Inertgase bezeichnet werden.

Verbrennungsprozesse werden in der Technik meist aus ökonomischen Gründen mit Luft als Sauerstoffträger durchgeführt. Zwangsläufig wird damit dem Verbrennungsprozeß fast das 5fache der notwendigen Gasmenge zugeführt, da die Luft neben rund 21 Vol% Sauerstoff etwa 79 % andere Gase, hauptsächlich Stickstoff enthält. Durch die Verbrennung Inertgas-haltiger Brenngase wird die Ballastgasmenge im Prozeß zusätzlich erhöht. Mit dem Begriff "Ballastgasmenge" soll hier und im folgenden die durch einen Verbrennungsprozeß geführte, weder brennbare, noch die Verbrennung unterhaltende Gasmenge verstanden werden. Sie setzt sich zusammen aus den Inertgasanteilen des Brenngases und des Sauerstoff enthaltenden Gases. Die Ballastgase in einem Verbrennungsprozeß bewirken durch die über den Kamin abgeführten Wärmemengen einen Verlust an Energie, durch die in ihnen enthaltenden Restmengen an Reaktionsstoffen einen Verlust an Ausbeute und ein umwelttechnisches Problem. Der naheliegende Weg zur Reduzierung der Ballastgasanteile, den Verbrennungsprozeß mit Reinsauerstoff durchzuführen, wird aus ökonomischen und meist auch aus technischen Gründen nur in Ausnahmefällen beschritten. So beschreibt z. B. H. Fischer in Chemie-Ing.-Techn. 39 (1967), S. 515 - 520 eine Anwendung des Claus-Verfahrens für Sauergase mit einem Schwefelwasserstoffgehalt zwischen 5 und 20 Vol.%, bei der mit Reinsauerstoff gearbeitet wird. Zusätzlich wird das Brenngas vorgewärmt, wenn sein Schwefelwasserstoffgehalt kleiner als 10 Vol.% ist, da dann die Reaktionswärme den Wärmehaushalt des Verfahrens nicht mehr zu decken vermag. Mit Reinsauerstoff wird hier ein technisch reiner Sauerstoff bezeichnet, wie er z. B. durch Luftzerlegung bei tiefen Temperaturen gewonnen wird.

Unterliegt der Gehalt an brennbarer Komponente im Brenngas zeitlichen Schwankungen, so ist es unerläßlich, die zur Verbrennung zuzuführende Sauerstoffmenge diesen Schwankungen so exakt wie möglich anzupassen. Bisherige Regelungsverfahren für Verbrennungsprozesse ermitteln in solchen Fällen über eine Analytik den Gehalt an brennbarer Komponente im Brenngas und steuern die Menge des Sauerstoffs - als Luft und/oder als Reinsauerstoff zugeführt - entsprechend der Stöchiometrie der Reaktion. Bei diesen bekannten Regelungsverfahren für Verbrennungsprozesse ist - unabhängig ob Luft, Reinsauerstoff oder ein Gemisch beider zur Verbrennung verwendet wird - die Konzentration an Ballastgas nicht konstant, sondern ändert sich in entgegengesetzter Weise wie die Konzentration an brennbarer Komponente im Brenngas.

Die Anlagen zur Durchführung der eingangs erwähnten Verbrennungsprozesse werden für eine vorgegebene Zusammensetzung des Brenngases ausgelegt. Ändert sich nun diese Zusammensetzung, so kann die Anlage nicht mehr optimal arbeiten. Verringert sich z. B. der Gehalt an brennbarer Komponente im Brenngas, steigt also dessen Ballastgasanteil, so muß bei der Umsetzung der gleichen Menge an brennbarer Komponente eine größere Inertgasmenge erhitzt werden. Hierdurch sinkt die Reaktionstemperatur ab, die Verfahrensbedingungen sind nicht mehr optimal. Häufig führt dies zu unvollständigen Umsätzen, im Abgas verbleiben unerwünschte Bestandteile, die durch aufwendige Verfahren und Anlagen entfernt werden müssen, wenn sie zu Belastungen der Umwelt führen. Wird die Reaktionswärme zur Energiegewinnung ausgenutzt, führt die niedrigere Temperatur der Gase nach der Umsetzung zu einer geringeren Energieausbeute.

Das erfindungsgemäße Verfahren vermeidet die Nachteile der bekannten Verfahren, die mit gleichbleibender Zusammensetzung des Sauerstoff enthaltenden Gases arbeiten. Es paßt gegenüber den bekannten Verfahren das Mischungsverhältnis von Luft und Reinsauerstoff dem Inertgasgehalt des Brenngases kontinuierlich dadurch an, daß in dem Gemisch aus Luft und Reinsauerstoff der Anteil an Luft vermindert und der an Reinsauerstoff erhöht wird, wenn der Inertgasgehalt im Brenngas zunimmt, bzw. der Anteil an Luft erhöht und der an Reinsauerstoff vermindert wird, wenn der Inertgasgehalt im Brenngas abnimmt. Insbesondere ist es zweckmäßig, das Verhältnis der Menge an brennbarer Komponente zu der Gesamtmenge an Ballastgas konstant zu halten.

Nach einer Ausgestaltung des Verfahrens kann dabei die brennbare Komponente mit einer geringeren als zur vollständigen Verbrennung notwendigen Menge an Sauerstoff verbrannt werden.

Das vorstehend beschriebene Verfahren wurde für das Einsatzgas von Clausanlagen entwickelt. Bei dem Clausprozeß stellen die mit den Ballastgasmengen aus der Anlage mitgeführten Schwefelverbindungen ein ernstes umwelttechnisches Problem dar, das aufwendige Abgasreinigungsverfahren erfordert. Das Verfahren kann auch bei anderen Verbrennungsprozessen ohne wesentliche Änderungen angewendet werden, wenn sich bei diesen durch die mehr oder minder exakte Konstanthaltung des Verhältnisses von Brenngas und Ballastgas Vorteile ergeben.

Als Führungsgröße für die Dosierung des Reinsauerstoffs zur Verbrennungsluft wird in der weiteren Ausgestaltung des Verfahrens das Verhältnis der Abgasmenge zur Menge der brennbaren Komponente im Brenngas genommen, wie später beschrieben wird.

Das erfindungsgemäße Verfahren ist für den Clausprozeß sowie allgemein für Verbrennungsprozesse von besonderer Bedeutung, die nicht lediglich zur Energiegewinnung dienen, sondern die die Vorstufe für eine katalytisch geführte chemische Reaktion sind. Bei solchen Reaktionen müssen die Reaktionsgase dem Katalysator mit einer Temperatur zugeführt werden, die zur Erzielung eines optimalen Umsatzes in einem sehr engen Bereich liegen muß. Dieser Temperaturbereich wird jedoch von den Reaktionsgasen durch die Verbrennungsenthalpie nicht erreicht, wenn gegenüber den Auslegungsdaten der Anlage eine größere Ballastgasmenge erwärmt werden muß. Bei dem erfindungsgemäßen Verfahren kann jedoch das Verhältnis von brennbarer Komponente zur Ballastgasmenge konstant gehalten werden. Dadurch dient die Verbrennungsenthalpie stets der Erwärmung des gleichen Gasvolumens, so daß die Eingangstemperatur für eine katalytische Reaktion exakt konstant gehalten werden kann.

Aus wirtschaftlichen und technischen Gründen wird man ein Inertgas-freies Brenngas mit Luft ohne Reinsauerstoffzusatz verbrennen. Der Minimalgehalt an brennbarer Komponente, bei dem sich der Ballastgasgehalt noch durch den Austausch von Luft durch Reinsauerstoff konstant halten läßt, ergibt sich aus der Stöchiometrie der Reaktion.

Er beträgt beispielsweise für die Verbrennung von Schwefelwasserstoff zu Schwefeltrioxid über die Zwischenstufe des Schwefeldioxids mit katalytischer Nachoxidation

$$H_2S + 2\ O_2 \longrightarrow SO_3 + H_2O \qquad 11{,}7\ Vol\%\ H_2S$$

und für die unterstöchiometrische Verbrennung von Schwefelwasserstoff zu Einsatzgas für die Clausreaktion

$$H_2S + 1/2\ O_2 \longrightarrow S + H_2O \qquad 34{,}6\ Vol\%\ H_2S$$

Brenngase mit geringeren Gehalten an brennbarer Komponente können diesem Verbrennungsverfahren zugänglich gemacht werden, indem man die Regelung des Mischungsverhältnisses von Luft und Reinsauerstoff so abstimmt, daß ein Inertgas-haltiges Brenngas mit Luft ohne Reinsauerstoffzusatz verbrannt wird. Wenn z. B. die Prozeßtechnologie und die Regelsysteme auf ein Brenngas mit 50 Vol% Inertgasanteil zur Verbrennung mit Luft ohne Reinsauerstoffzusatz eingestellt wird, so erniedrigen sich die Minimalgehalte an brennbarer Komponente für die o. a. Reaktionen auf 10,5 bzw. 25,7 Vol% Schwefelwasserstoff.

Das jeweilige Mischungsverhältnis von Luft und Reinsauerstoff

zur Konstanthaltung der Ballastgasmenge ist den Fig. 1 bzw. 2 in Abhängigkeit vom Inertgasgehalt des Brenngases zu entnehmen. Der Verlauf der Kurven ist unabhängig von der Art des zu verbrennenden Gases. Er wird lediglich von der Anzahl der Mole Sauerstoff pro Mol brennbarer Komponente - dem stöchiometrischen Faktor F - bestimmt. Der stöchiometrische Faktor beträgt für die beiden angeführten Reaktionen F = 2 bzw. F = 0,5. Die notwendigen Mischungsverhältnisse von Luft und Reinsauerstoff zur Konstanthaltung der Ballastgasmenge können für Brenngase, deren Verbrennungsreaktionen mit Sauerstoff andere stöchiometrische Faktoren haben, in einfacher Weise abgeleitet werden.

Die Verwendung des Verhältnisses der Abgasmenge zur Menge der brennbaren Komponente im Brenngas als Führungsgröße für die Dosierung des Reinsauerstoffs soll am Beispiel des Clausprozesses beschrieben werden. Stand der Technik ist die Steuerung der Luftzufuhr durch eine Messung der Schwefeldioxid- und Schwefelwasserstoffkonzentration im Abgas der Anlage. Das Verhältnis dieser beiden Konzentrationen muß der Reaktionsgleichung entsprechend 1 : 2 sein. Bei einem höheren Schwefeldioxidanteil wird die Luftzufuhr vermindert, bei zu hohem Schwefelwasserstoffanteil entsprechend erhöht.

Erfindungsgemäß dient das Verhältnis der Abgasmenge zur Menge der brennbaren Komponente im Brenngas als Führungsgröße für die Zugabe von Reinsauerstoff. Die Abgasmenge wird in üblicher Weise mittels eines Strömungsmengenmessers (Normblende, Venturimesser etc.) gemessen. Die Menge an brennbarer Komponente im Brenngas wird gleichfalls durch eine Strömungsmengenmessung und zusätzlich mit einem für diese Komponente spezifischen Analysenverfahren, beispielsweise durch Gaschromatographie ermittelt. Das Verhältnis aus beiden Werten kann elektrisch oder pneumatisch gebildet und zur Steuerung eines Regelventils für die Zugabe von Reinsauerstoff benutzt werden. Aus der Stöchiometrie der Reaktion ergibt sich für das Verhältnis ein bestimmter Sollwert,

der z. B. für die Clausreaktion 2,88 : 1 beträgt. Er kann auch größer oder kleiner gewählt werden, je nachdem, ob ein Brenngas mit einem bestimmten Inertgasanteil ohne Zugabe von Reinsauerstoff oder ob ein 100 %iges Brenngas bereits mit Sauerstoffanreicherung verbrannt werden soll.

Befindet sich dieser Regelkreis, bestehend aus der Abgas- und Brenngasmengenmessung zuzüglich Brenngasanalyse - Steuergerät - Regelventil für Reinsauerstoffzugabe, auf dem Sollwert und tritt keine Änderung in der Zusammensetzung des Brenngases ein, so ist das Regelventil in Ruhe. Nimmt der Gehalt an brennbarer Komponente im Brenngas ab, so wird das Verhältnis Abgasmenge zur Menge der brennbaren Komponente größer als der eingestellte Sollwert und das Regelventil öffnet die Zugabe von Reinsauerstoff. Gleichzeitig wird zum Ausgleich des dann eintretenden Sauerstoffüberschusses die Luftzufuhr durch den zum Stand der Technik gehörenden Regelkreis zurückgefahren. Im Ergebnis wird also ein Brenngas mit größerem Inertgasanteil mit einer geringen Luftmenge höheren Sauerstoffgehaltes verbrannt. Umgekehrt wird bei Unterschreiten des Sollwertes die Sauerstoffzugabe zurückgefahren und die Luftmenge erhöht.

Konzentrationsschwankungen werden also im Zusammenwirken des erfindungsgemäßen mit dem bekannten Regelkreis ausgeglichen, während der bekannte Regelkreis allein lediglich Mengenschwankungen der brennbaren Komponente des Brenngases durch Anpassung der Luftmenge ausgleichen kann.

Die neben Schwefelwasserstoff häufig im Einsatzgas von Clausanlagen enthaltenen sonstigen brennbaren Komponenten (Kohlenmonoxid, Wasserstoff, Kohlenwasserstoffe) verbrauchen Sauerstoff und erhöhen die Abgasmenge. Sie müssen regelungstechnisch durch eine entsprechende Vergrößerung des Sollwertes für das Verhältnis Abgasmenge zur Eingangsmenge Schwefelwasserstoff berücksichtigt werden. Das kann, wenn der Gehalt an brennbaren Bestandteilen außer $H_2S$ keinen großen Schwankungen nach Art und Menge unterliegt, empirisch geschehen. Genauer, aber auch aufwendiger, ist eine Berücksichtigung bei der Eingangsmenge durch ein zusätzliches Analysengerät, das beispielsweise ein Gaschromatograph oder auch ein Heizwertmesser sein kann.

Beispiel 1

Ein Brenngas mit 100 Vol% $H_2S$ wird mit Luft (~21 Vol% $O_2$) unter katalytischer Nachoxidation zu Schwefeltrioxid verbrannt. Der mit der Verbrennungsluft eingeführte Ballastgasanteil beträgt, bezogen auf das Gasgemisch vor der Verbrennung, 71,5 Vol%. Ein aus einer anderen Quelle stammendes, aber in der selben Anlage zu verarbeitendes Brenngas hat nur einen $H_2S$-Gehalt von 66,7 Vol%. Die Verbrennung wird mit einer Verbrennungsluft durchgeführt, die 22,2 Vol% Sauerstoff enthält. Man erhält sie, wenn 6,5 % der erforderlichen Sauerstoffmenge als Reinsauerstoff zugesetzt wurden, d. h. ein Gemisch aus 98,55 Vol-Teilen Luft und 1,45 Vol-Teilen Reinsauerstoff als Verbrennungsluft eingesetzt wird. Der Ballastgasgehalt beträgt so wie oben 71,5 Vol%, während er bei der Verbrennung mit Luft auf 72,7 Vol% steigen würde.

Beispiel 2

In einer Gaswäsche zur Entschwefelung von Raffineriegasen fällt bei der Desorption der Waschlösungen ein Gas an, das max. 40 Vol% $H_2S$ enthält. Dieses Gas wird mit Luft (~21 Vol% $O_2$) zur Schwefelgewinnung in einer Clausanlage verbrannt. Dieses Gasgemisch enthält im unverbrannten Zustand 69,3 Vol% Ballastgase. Durch Änderung der Fahrweise im Raffineriebetrieb und/oder im Schwefelgehalt des eingesetzten Rohöls sinkt der $H_2S$-Gehalt im Brenngas auf 25 Vol%. Der Ballastgasgehalt bleibt konstant, wenn dieses Brenngas mit einem Gemisch aus Luft und Reinsauerstoff verbrannt wird, dessen Sauerstoffgehalt zu 79,8 % aus Reinsauerstoff und zu 20,2 %

aus Luftsauerstoff besteht. Dieses Gemisch wird aus 54,6 Vol-Teilen Luft und 45,4 Vol-Teilen Luftsauerstoff gebildet.

Patentansprüche

1. Verfahren zur Verbrennung gasförmiger Brennstoffe, deren Inertgasgehalt sich während des Betriebsverlaufes ändert, mit Luft, sauerstoffangereicherter Luft oder Sauerstoff, dadurch gekennzeichnet, daß das Mischungsverhältnis von Luft und Reinsauerstoff kontinuierlich dem Inertgasgehalt des Brenngases angepaßt wird, indem der Anteil an Luft vermindert/erhöht und der an Reinsauerstoff erhöht/vermindert wird, wenn der Inertgasgehalt im Brenngas zunimmt/abnimmt.

2. Verfahren nach Anspruch 1, dadurch gekennzeichnet, daß das Verhältnis der Menge an brennbarer Komponente im Brenngas zur Gesamtmenge der mit dem Brenngas und der Verbrennungsluft in den Prozeß eingeführten Ballastgasmenge konstant gehalten wird.

3. Verfahren nach Anspruch 1 oder 2, dadurch gekennzeichnet, daß die brennbare Komponente mit einer geringeren als zur vollständigen Verbrennung notwendigen Menge an Sauerstoff verbrannt wird.

4. Verfahren nach einem der Ansprüche 1 bis 3, dadurch gekennzeichnet, daß das Verhältnis der Abgasmenge zur Menge der brennbaren Komponente im Brenngas als Führungsgröße für die Dosierung des Reinsauerstoffes verwendet wird.

5. Anwendung des Verfahrens nach einem der Ansprüche 1 bis 4 beim Claus-Verfahren.

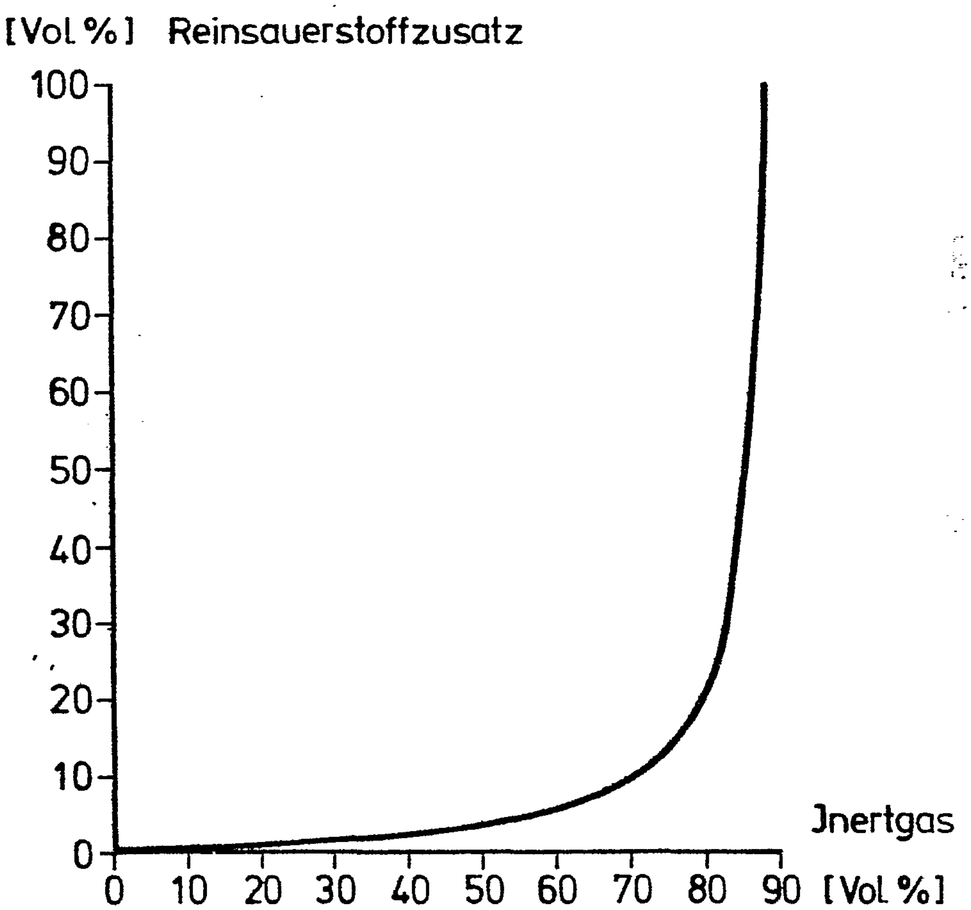


Figur 1

Reinsauerstoffzusatz zur Verbrennungsluft in Abhängigkeit vom Jnertgasgehalt des Brenngases für die Reaktion

$$H_2S + 2O_2 \rightarrow SO_3 + H_2O$$

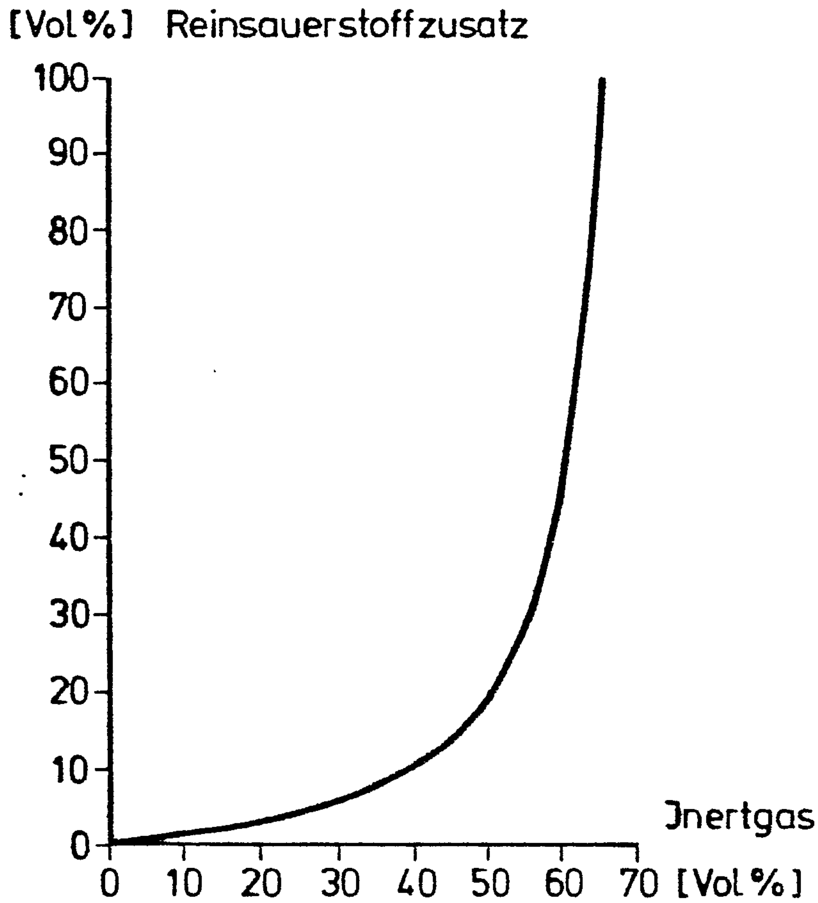


Figur 2

Reinsauerstoffzusatz zur Verbrennungsluft in Abhängigkeit vom Jnertgasgehalt des Brenngases für die Reaktion

$$H_2S + 1/2\,O_2 \rightarrow S + H_2O$$